# FASCICULE DE BREVET EUROPEEN

(11) **EP 0 466 588 B1**
(45) Date de publication et mention de la délivrance du brevet: **21.12.1994**
(21) Numéro de dépôt: 91401919.5
(22) Date de dépôt: 10.07.1991
(51) Int. Cl.: B60P 3/20, B62D 33/04

(54) **Cellule isotherme démontable pour fourgonnette**
Zerlegbare isothermische Zelle für Lieferwagen
Demountable isothermic cell for light delivery van

(30) Priorité: 11.07.1990 FR 9008854
(43) Date de publication de la demande: 15.01.1992
(73) Titulaire: E C P ETUDES REALISATIONS CONSTRUCTIONS AMENAGEMENTS POLYESTER, F-95480 Pierrelaye (Val d'Oise) (FR)
(72) Inventeur: Lebrequier, Marcel, F-95150 Taverny (FR)
(74) Mandataire: Hasenrader, Hubert

(56) Documents cités:
- EP-A- 0 218 483
- BE-A- 486 936
- FR-A- 1 527 579
- US-A- 4 004 373

## Description

La présente invention concerne l'isolation thermique de véhicules de petite taille.

Elle concerne plus précisément une cellule isotherme démontable montée à l'intérieur d'un véhicule du type fourgonnette, pour en constituer le volume utile de chargement, ladite fourgonnette comportant une ouverture arrière et des passages de roue dans les angles délimités par son plancher et ses parois latérales, ladite cellule présentant :

un panneau supérieur situé sous le pavillon du véhicule,

un panneau inférieur recouvrant le plancher entre les passages de roue,

un panneau avant et des panneaux latéraux s'étendant entre les bords en correspondance dudit panneau supérieur et dudit panneau inférieur,

ainsi que des panneaux de retour disposés entre les extrémités arrière desdits panneaux latéraux et ladite porte arrière.

Ce type de cellule connu permet d'équiper des fourgonnettes pour le transport de denrées périssables. La cellule est en général réalisée par un assemblage de huit panneaux plans de type sandwich dont les dimensions sont adaptées aux dimensions de la caisse du véhicule et limitées à la taille de l'ouverture de la porte arrière. Les panneaux latéraux sont disposés à la verticale contre les passages de roue, ce qui entraîne un vide important entre les panneaux latéraux de la cellule et les parois latérales de la caisse et diminue le volume utile de transport.

Les panneaux sont assemblés entre eux le long des arêtes de la cellule par des moyens appropriés et, en particulier, par collage au mastic. Les extrémités supérieures des panneaux latéraux sont disposées sous la face inférieure du panneau supérieur. C'est pourquoi on ne peut accrocher d'objets lourds sur ces panneaux latéraux, car il y aurait un risque de basculement de ceux-ci vers l'intérieur de la cellule. Enfin le montage de la cellule dans la caisse du véhicule est une opération longue et minutieuse par suite de l'ajustement nécessaire des pièces entre elles et avec la caisse proprement dite. En particulier, le positionnement des parois de retour sur la partie arrière de la cellule et autour de l'ouverture arrière demande un soin particulier.

Le document américain US-A-4 004 373 montre un mode de construction d'une cellule pour camion ou remorque, dans laquelle on assemble des panneaux à l'aide de cornières appropriées qui permettent d'encliqueter chaque panneau sur la cornière correspondante par pivotement autour de la cornière après avoir introduit en biais le bord du panneau dans une rainure de la glissière. Cette rainure est délimitée par deux ailes comportant des nervures internes qui coopèrent avec des gorges ménagées dans le bord du panneau. Le bord du panneau est biseauté pour permettre son pivotement. Ce document n'indique pas qu'il soit possible d'utiliser cette technique pour habiller l'intérieur d'une fourgonnette. En tout état de cause, les panneaux étant encliquetés sur les cornières, le démontage de la cellule semble difficile, voire impossible, dans le cas où cette cellule serait montée à l'intérieur d'une fourgonnette.

Le but de la présente invention est de proposer une cellule isotherme démontable montée à l'intérieur d'un véhicule de type fourgonnette, qui permette l'accrochage de charges lourdes suspendues à des inserts métalliques incorporés au moulage des panneaux latéraux et qui offre un volume utile de chargement nettement amélioré. Un second but de l'invention est de proposer une cellule isotherme démontable qui demande un temps de montage inférieur, et dans laquelle le positionnement des panneaux de retour ne pose pas de problème particulier et assurent une parfaite étanchéité entre la cellule et la carrosserie

Le but est atteint selon l'invention par le fait que la cellule proposée réunit l'ensemble des caractéristiques suivantes :
a) le panneau supérieur comporte sur au moins ses bords latéraux une feuillure ouverte vers le bas et destinée à loger les extrémités supérieures des panneaux latéraux,
b) les panneaux latéraux sont plaqués contre les parties de parois latérales du véhicule situées au-dessus des passages de roue,
c) les passages de roue sont cachés par des panneaux complémentaires qui s'étendent sur toute la longueur de la cellule et se présentent sous forme de deux marches disposées entre le bord latéral du panneau inférieur et le bord inférieur du panneau latéral correspondant, les panneaux complémentaires formant la marche inférieure étant réalisés en une seule pièce avec le panneau inférieur, par moulage,
d) les panneaux de retour sont réalisés en une seule pièce avec les panneaux latéraux correspondants par moulage et comportent des parois de butée s'appliquant contre le cadre arrière de la portière.

Grâce à la présence des feuillures du panneau supérieur, les panneaux latéraux ne peuvent plus basculer vers l'intérieur du véhicule lorsqu'on y accroche des charges lourdes. La mise en place d'un panneau latéral est particulièrement aisée, on introduit son extrémité supérieure dans une feuillure, et on le fait pivoter autour de son extrémité jusqu'à ce qu'il soit plaqué contre la partie de la paroi latérale du véhicule située au-dessus du passage de roue, les parois de butée arrière servant de guide pour leur positionnement. La disposition de ces panneaux latéraux contre les parois du véhicule permet d'obtenir un volume utile plus important que celui obtenu dans l'art antérieur.

Les parois de butée solidaires des panneaux latéraux permettent de positionner ceux-ci sans risque d'erreur par rapport à la caisse du véhicule et assurent une parfaite liaison ainsi qu'un bel aspect de finition.

Avantageusement, les panneaux complémentaires formant la marche supérieure sont réalisés en une seule pièce avec la paroi latérale correspondante par moulage.

Grâce à cette disposition la cellule ne comporte plus que cinq pièces : un panneau avant, un panneau supérieur, un panneau inférieur et deux panneaux latéraux.

D'autres avantages et caractéristiques de l'invention ressortiront à la lecture de la description suivante fait en référence au dessin annexé sur lequel :
- la figure 1 est une coupe transversale d'une caisse de véhicule pourvue de la cellule de l'invention, la coupe étant faite au droit des passages de roue,
- la figure 2 est une coupe verticale du panneau supérieur de la cellule,
- la figure 3 montre en détail la liaison entre le panneau supérieur et un panneau latéral,
- la figure 4 est une vue en perspective de la partie inférieure de la cellule de l'invention,
- la figure 5 montre la disposition des panneaux au voisinage d'un passage de roue selon un premier mode de réalisation,
- la figure 6 montre la disposition des panneaux au voisinage d'un passage de roue selon un deuxième mode de réalisation, et
- la figure 7 représente une coupe horizontale de la partie arrière gauche de la cellule au voisinage de l'ouverture arrière.

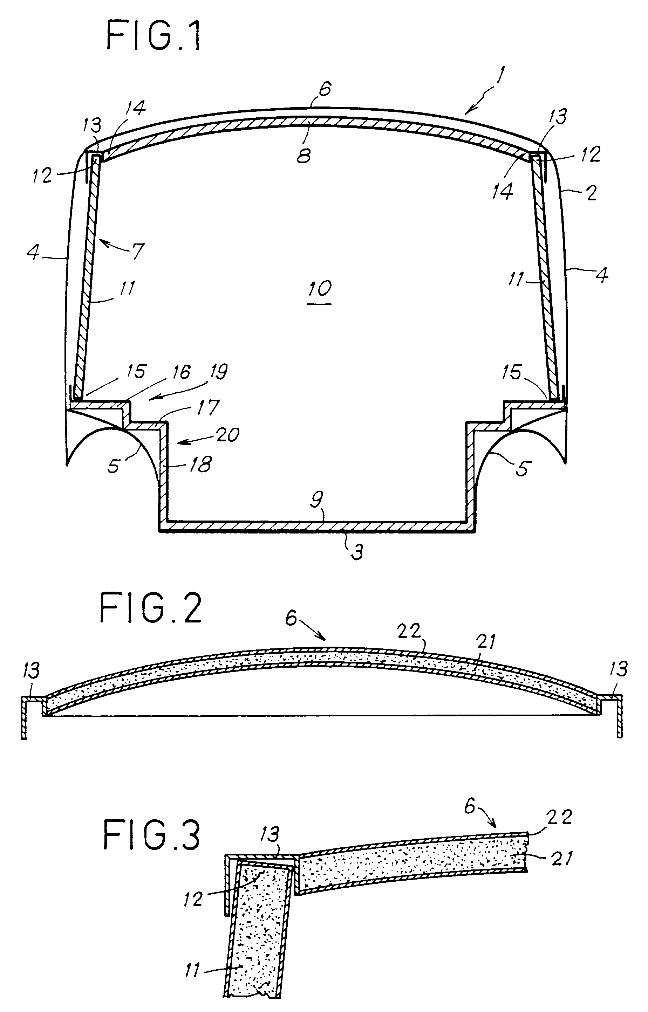

La figure 1 représente une coupe transversale d'un véhicule 1 de type fourgonnette, au droit des roues arrière. Ce véhicule 1 comporte une caisse 2 délimitée par un plancher 3 situé au-dessus de l'essieu arrière, non représenté sur le dessin, deux parois latérales 4 et un pavillon 6. La caisse 2 présente, dans ses coins latéraux inférieurs, des passages de roue 5 qui font saillie à l'intérieur du volume de caisse, et elle est accessible grâce à une ouverture arrière obturable par une ou deux portes arrière.

La caisse 2 contient une cellule isotherme démontable 7 qui comporte, de manière connue, un panneau supérieur 8 situé sous le pavillon 6, un panneau inférieur 9 recouvrant le plancher 3, un panneau avant 10 séparant l'intérieur de la cellule 7 de la cabine de pilotage du véhicule, deux panneaux latéraux 11 disposés à la verticale entre les panneaux inférieur 9 et supérieur 8. La cellule 7 présente, de plus, des panneaux de retour qui s'étendent entre les extrémités arrière des panneaux latéraux 11 et les bords de l'ouverture arrière de la caisse 2

Cette disposition de cellule 7 est connue en elle-même

Selon l'invention et comme on le voit clairement sur la figure 1, les extrémités supérieures 12 des panneaux latéraux 11 s'engagent dans des feuillures 13 ouvertes vers le bas et prévues le long des bords latéraux 14 du panneau supérieur 8. Les panneaux latéraux 11 sont disposés au voisinage des parois latérales 4 et leurs extrémités inférieures 15 reposent sur des panneaux complémentaires 16 qui s'étendent sensiblement à l'horizontale sur toute la longueur de la cellule 2 et au-dessus des passages de roue 5. D'autres panneaux complémentaires 17 et 18 sont disposés entre chaque panneau 16 et le panneau inférieur 9, de manière à former avec ce panneau 16 une marche supérieure 19 et une marche inférieure 20 qui recouvrent chaque passage de roue 5.

Les divers panneaux de la cellule 7 sont du type sandwich et sont réalisés à partir d'un noyau 21 tendre, en mousse de polyuréthane par exemple, recouvert d'une peau d'étanchéité 22 de préférence en polyester. Les divers éléments constituant la cellule isotherme de la présente invention sont réalisés par moulage, ce qui permet de leur donner une forme non plane adaptée aux formes de la caisse 2 du véhicule 1.

La figure 2 montre une coupe du panneau supérieur 6. Les feuillures 13 sont également en polyester et sont formées lors du recouvrement du noyau 21 en polyuréthane par la peau en polyester 22 par moulage. Comme on le voit le panneau 6 a la forme d'un dome de manière à augmenter la hauteur de la cellule 7

La figure 3 montre l'emboîtement de l'extrémité supérieure 12 d'un panneau latéral 11 dans la feuillure correspondante 13. De préférence, la liaison entre le panneau supérieur 6 et le panneau avant 10 est assurée par une feuillure non représentée sur le dessin disposée sur l'avant du panneau supérieur 6. La feuillure 13 a une section en forme de U renversé

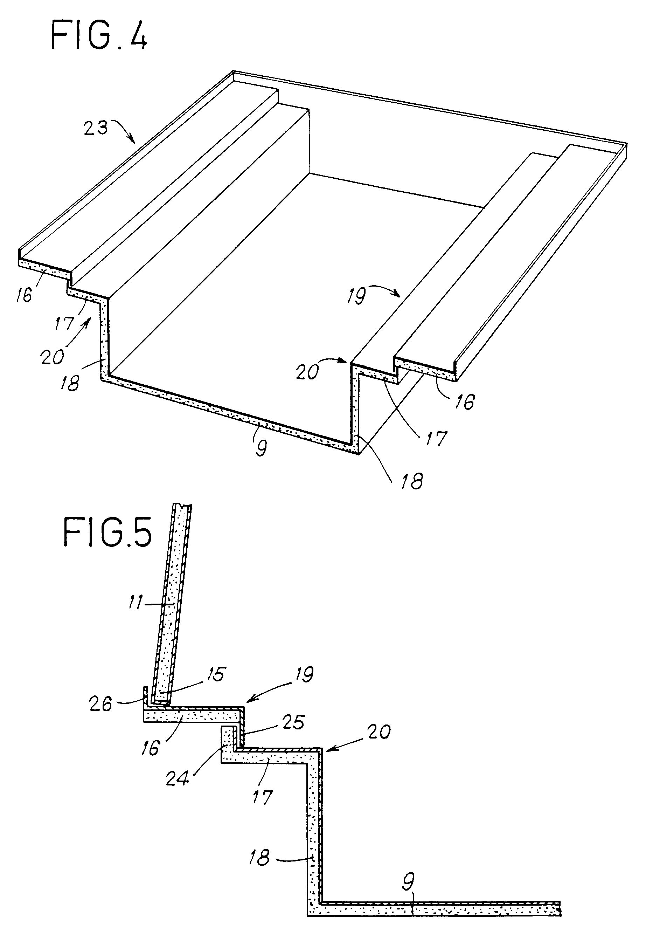

Sur la figure 4 on voit clairement que la partie inférieure 23 de la cellule 7 est réalisée sous la forme d'un bac monobloc réalisé par moulage dont le fond constitue le panneau inférieur 9 et dont les bords constituent les panneaux complémentaires 17 et 18 formant la marche inférieure 20.

La largeur de ce bac est limitée par les dimensions de l'ouverture arrière de la caisse 2.

Le panneau complémentaire 17 est prolongé sur son bord extérieur par une plaque en polyester 24 qui s'étend vers le haut et qui sert de butée à une deuxième plaque 25 solidaire du panneau complémentaire 16.

La figure 5 montre la disposition des panneaux au voisinage d'un passage de roue 5 selon un premier mode de réalisation. Le panneau complémentaire 16 est désolidarisé du panneau latéral 11 et il comporte une deuxième plaque de butée 26 qui s'étend vers le haut et contre laquelle l'extrémité inférieure 15 du panneau latéral 11 vient en appui.

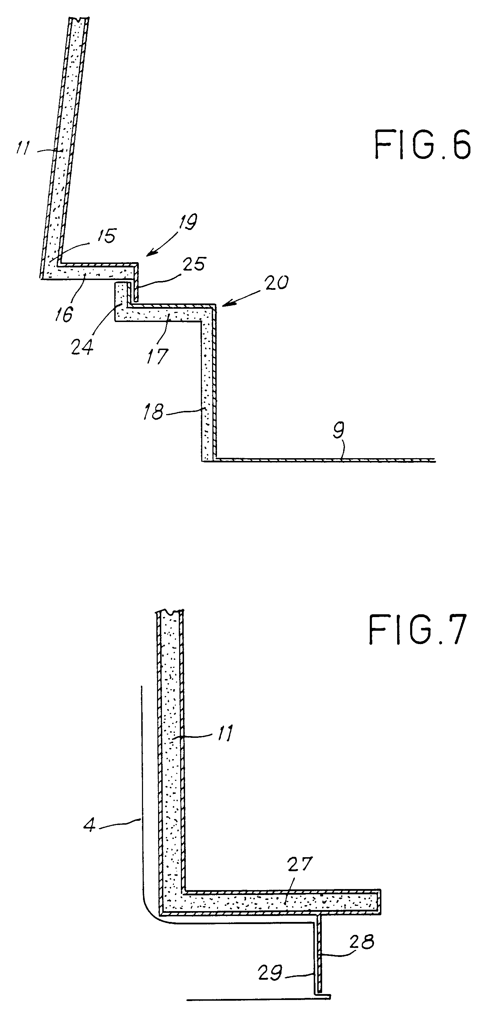

La figure 6 montre un deuxième mode de réalisation de l'invention dans lequel la marche supérieure 19 constituée par le panneau complémentaire 16 et la plaque 25 est réalisée en une seule pièce avec le panneau latéral 11.

Comme on le voit sur la figure 7 le panneau de retour 27 est réalisé en une seule pièce avec le panneau latéral 11 et il comporte des parois de butée 28 qui s'appliquent contre les surfaces 29 délimitant l'ouverture arrière de la caisse 2. Ces parois de butée 28 permettent de positionner longitudinalement les panneaux latéraux 11 lors du montage de la cellule isotherme 7.

De préférence, le panneau supérieur 8 est prolongé dans sa partie arrière par une paroi de butée, semblable à la paroi de butée 28 du panneau latéral 11, qui vient s'appliquer comme les surfaces supérieures délimitant l'ouverture arrière.

Le montage de cette cellule se comprend aisément. On introduit d'abord la partie inférieure en forme de bac 23 dans la caisse 2 et on la positionne correctement sur le plancher 3. On place ensuite le panneau supérieur 8 et le panneau avant 10. On fixe temporairement le panneau supérieur 8 contre le pavillon 6. On entre enfin les panneaux latéraux 11 par l'ouverture arrière du véhicule 1.

On introduit les extrémités supérieures 12 des panneaux latéraux 11 dans les feuillures 13 et on fait pivoter chaque panneau latéral 11 autour de la feuillure 13 jusqu'à ce que les parois de butée 28 soient en appui contre les surfaces 29. Les panneaux latéraux 11 sont alors plaqués contre les parois latérales 4 du véhicule 1. On termine le montage en appliquant des joints d'étanchéité aux arêtes de la cellule 7 et contre les battées de porte.

La porte arrière peut naturellement être recouverte intérieurement par un panneau d'isolation de type sandwich.

Pour démonter la cellule 7 on enlève les joints et on retire les divers éléments dans l'ordre inverse de l'ordre de montage.

## Revendications

1. Cellule isotherme démontable montée à l'intérieur d'un véhicule (1) du type fourgonnette, pour en constituer le volume utile de chargement, ladite fourgonnette comportant une ou deux portes arrière et des passages de roue (5) dans les angles délimités par son plancher (3) et ses parois latérales (4), ladite cellule (7) présentant :
un panneau supérieur (8) situé sous le pavillon du véhicule (6),
un panneau inférieur (9) recouvrant le plancher (3) entre les passages de roue (5),
un panneau avant (10) et des panneaux latéraux (11) s'étendant entre les bords en correspondance dudit panneau supérieur (8) et dudit panneau inférieur (9),
ainsi que des panneaux de retour (27) disposés entre les extrémités arrière desdits panneaux latéraux (11) et ladite porte arrière,
caractérisée en ce que
a) le panneau supérieur (8) comporte sur au moins ses bords latéraux (14) une feuillure (13) ouverte vers le bas et destinée à loger les extrémités supérieures (12) des panneaux latéraux (11),
b) les panneaux latéraux (11) sont plaqués contre les parties de parois latérales (4) du véhicule (1) situées au-dessus des passages de roue (5),
c) les passages de roue (5) sont cachés par des panneaux complémentaires (16, 17, 18) qui s'étendent sur toute la longueur de la cellule (7) et se présentent sous forme de deux marches (19, 20) disposées entre le bord latéral du panneau inférieur (9) et le bord inférieur (15) du panneau latéral (11) correspondant, les panneaux complémentaires (17, 18) formant la marche inférieure (20) étant réalisés en une seule pièce avec le panneau inférieur (9) par moulage,
d) les panneaux de retour (27) sont réalisés en une seule pièce avec les panneaux latéraux (11) correspondants par moulage et comportent des parois de butée (28) s'appliquant contre les surfaces (29) délimitant l'ouverture de la portière.

2. Cellule selon la revendication 1, caractérisée en ce que les panneaux complémentaires (16, 25) formant la marche supérieure (19) sont réalisés en une seule pièce avec la paroi latérale (11) correspondante par moulage.

3. Cellule selon l'une quelconque des revendications 1 et 2, caractérisée en ce que lesdits panneaux sont réalisés à partir d'un noyau (21) tendre recouvert par moulage d'un peau d'étanchéité.

4. Cellule selon la revendication 3, caractérisée en ce que la peau d'étanchéite est en polyester.

## Claims

1. Demountable isothermic cell mounted in the interior of a vehicle (1) of the light delivery van type to constitute the useful loading volume thereof, the said light delivery van comprising one or two rear doors and wheel housings (5) in the corners defined by its floor (3) and its side walls (4), the said cell (7) having an upper panel (8) situated under the roof of the vehicle (6), a lower panel (9) covering the floor (3) between the wheel housings (5), a front panel (10) and side panels (11) extending between the corresponding edges of the said upper panel (8) and of the said lower panel (9), and back panels (27) disposed between the rear ends of the said side panels (11) and the said rear door, characterised in that
a) the upper panel (8) is provided at least on its side edges (14) with a rabbet (13) open towards the bottom and adapted to house the upper ends (12) of the side panels (11),
b) the side panels (11) bear against the parts of the side walls (4) of the vehicle (1) situated above the wheel housings (5),
c) the wheel housings (5) are concealed by complementary panels (16, 17, 18) which extend over the entire length of the cell (7) and are in the form of two steps (19, 20) disposed between the side edge of the lower panel (9) and the lower edge (15) of the corresponding side panel (11), the complementary panels (17, 18) forming the lower step (20) being moulded in one piece with the lower panel (9),
d) the back panels (27) are moulded in one piece with the corresponding side panels (11) and comprise stop walls (28) bearing against the surfaces (29) defining the opening of the door.

2. Cell according to claim 1, characterised in that the complementary panels (16, 25) forming the upper step (19) are moulded in one piece with the corresponding side wall (11).

3. Cell according to any one of claims 1 and 2, characterised in that the said panels are made from a soft core (21) covered by moulding in a sealing skin.

4. Cell according to claim 3, characterised in that the sealing skin is made of polyester.

## Patentansprüche

1. Demontierbare isotherme Zelle, die im Inneren eines Fahrzeugs (1) vom Kleintransportertyp zwecks Bildung des Ladenutzraums desselben montiert ist, wobei der Kleintransporter eine oder zwei Hintertüren und Raddurchgänge (5) in den von seinem Boden (3) und seinen Seitenwänden (4) begrenzten Ecken aufweist, welche Zelle (7) umfaßt:
eine obere Platte (8), die unter dem Dach des Fahrzeugs (6) vorgesehen ist,
eine untere Platte (9), die den Boden (3) zwischen den Raddurchgängen (5) überdeckt,
eine vordere Platte (10) und seitliche Platten (11), die sich zwischen den Rändern in Übereinstimmung mit der oberen Platte (8) und der unteren Platte (9) erstrecken,
sowie rücklaufende Platten (27), die zwischen den Hinterenden der seitlichen Platten (11) und der Hintertür angeordnet sind,
dadurch gekennzeichnet, daß
a) die obere Platte (8) zumindest an ihren Seitenrändern (14) einen nach unten offenen Falz (13) zur Aufnahme der oberen Enden (12) der seitlichen Platten (11) aufweist,
b) die seitlichen Platten (11) an den oberhalb der Raddurchgänge (5) befindlichen Teilen der Seitenwände (4) des Fahrzeugs (1) angebracht sind,
c) die Raddurchgänge (5) durch komplementäre Platten (16, 17, 18) verdeckt sind, welche sich über die gesamte Länge der Zelle (7) erstrecken und in Form von zwei Stufen (19, 20) ausgebildet sind, die zwischen dem Seitenrand der unteren Platte (9) und dem unteren Rand (15) der entsprechenden seitlichen Platte (11) angeordnet sind, wobei die die untere Stufe (20) bildenden komplementären Platten (17, 18) durch Formen einstückig mit der unteren Platte (9) ausgebildet sind,
d) die rücklaufenden Platten (27) durch Formen einstückig mit den entsprechenden seitlichen Platten (11) ausgebildet sind und Anschlagwände (28) aufweisen, die an den die Öffnung der Fahrzeugtür begrenzenden Flächen (29) anliegen.

2. Zelle nach Anspruch 1, dadurch gekennzeichnet, daß die die obere Stufe (19) bildenden komplementären Platten (16, 25) durch Formen einstückig mit der entsprechenden Seitenwand (11) ausgebildet sind.

3. Zelle nach einem der Ansprüche 1 und 2, dadurch gekennzeichnet, daß die Platten aus einem weichen Kern (21), der durch Formen mit einer geschlossenen Außenhaut überzogen ist, hergestellt sind.

4. Zelle nach Anspruch 3, dadurch gekennzeichnet, daß die geschlossene Außenhaut aus Polyester ist.
